# EUROPÄISCHE PATENTSCHRIFT

(11) **EP 3 890 100 B1**
(45) Veröffentlichungstag und Bekanntmachung des Hinweises auf die Patenterteilung: **02.04.2025**
(21) Anmeldenummer: 21159376.9
(22) Anmeldetag: 25.02.2021
(51) Int. Cl.: H01M 50/183, H01M 50/204, H01M 50/24, H01M 50/284, H02J 7/00, H05K 5/00

(54) **AKKUPACK FÜR EIN ELEKTROGERÄT**
BATTERY PACK FOR AN ELECTRICAL DEVICE
ENSEMBLE BATTERIE POUR UN APPAREIL ÉLECTRIQUE

(30) Priorität: 01.04.2020 DE 102020109105
(43) Veröffentlichungstag der Anmeldung: 06.10.2021
(73) Patentinhaber: Einhell Germany AG, 94405 Landau / Isar (DE)
(72) Erfinder: THANNHUBER, Markus, 94405 Landau (DE)
(74) Vertreter: Hofstetter, Schurack & Partner

(56) Entgegenhaltungen:
- WO-A1-2013/099227
- WO-A1-2014/049926

## Beschreibung

Die Erfindung betrifft ein Akkupack für ein Elektrogerät, ein Elektrogerät mit einem solchen Akkupack sowie ein Verfahren zur Herstellung eines Akkupacks für ein Elektrogerät.

Akkupacks für Elektrogeräte, beispielsweise Elektrowerkzeuge, sind häufig abnehmbar an den Elektrogeräten befestigt, sodass die Akkupacks beispielsweise zum Laden von dem Elektrogerät abgenommen werden können. Dies hat außerdem den Vorteil, dass das Elektrogerät mit einem weiteren Akkupack auch während des Ladens des ersten Akkupacks betrieben werden kann. Zudem können gegebenenfalls verschiedene Elektrogeräte mit demselben Akkupack betrieben werden.

Bei solchen Akkupacks stehen die elektrischen Kontaktelemente jedoch notwendigerweise in Kontakt mit der Umwelt des Akkupacks, da ein elektrischer Kontakt zwischen Akkupack und Elektrogerät hergestellt werden muss. Dies hat zur Folge, dass Wasser in das Innere des Akkupacks eindringen kann und dort gegebenenfalls in Kontakt mit der Schaltungselektronik des Akkupacks und/oder den Akkumulatorzellen des Akkupacks kommen kann, was wiederum zum Defekt des Akkupacks führen kann.

Im Dokument EP 2 48 736 A1 wird eine Batterie für ein Elektrowerkzeug beschrieben, bei dem eine Leiterplatte beispielsweise mit Schrauben an einem Gehäuse fixiert ist. Es ist Dichtungselement vorgesehen, das zwischen dem Schaltungsträger und dem Batteriegehäuse angeordnet ist und elektronische Komponenten, die auf dem Schaltungsträger montiert sind, umgibt. Dadurch wird die Batteriezelle selbst jedoch nicht vor eindringendem Wasser geschützt. Zudem werden nur bestimmte Teile des Schaltungsträgers geschützt.

Das Dokument US 2018/0366697 A1 beschreibt ein Batteriepack mit einem Außengehäuse und einen Zellmodul. Das Zellmodul wird mit einer hydrophoben Nanobeschichtung beschichtet. Die Schaltungselektronik des Batteriepacks wird jedoch durch die Nanobeschichtung nicht vor eindringendem Wasser geschützt.

Dokument WO 2013/099227 A1 beschreibt ein Batteriepack mit einem Gehäuse, das einen Kühlluftdurchgang und einen isolierten Raum 52 aufweist, der von dem Kühlluftdurchgang isoliert ist. Eine Isolierwand trennt den Kühlluftdurchgang physisch von dem isolierten Raum. Batteriezellen sind innerhalb des Gehäuses so angeordnet, dass ein Endabschnitt der Batteriezellen innerhalb des isolierten Raums und ein Zwischenabschnitt Batteriezellen angrenzend an den Kühlluftdurchgang angeordnet ist. Die Isolierwand kann Löcher aufweisen, durch welche sich die Batteriezellen erstrecken. Eine Leiterplatte ist innerhalb des Gehäuses angeordnet und erstreckt sich durch Isolierwand, so dass ein Endabschnitt der Leiterplatte innerhalb des isolierten Raums angeordnet ist und ein Zwischenabschnitt der Leiterplatte neben dem Kühlluftdurchgang angeordnet ist.

Dokument WO 2014/049926 A1 beschreibt ein Batteriepack mit einem Gehäuse, das einen Gehäusekörper und eine Abdeckung aufweist sowie einen Schaltungsträger. Ein Dichtungselement dichtet einen Bereich zwischen der Abdeckung und dem Schaltungsträger ab, sowie einen Bereich zwischen der Abdeckung und einer Schaltungsträgerabdeckung. Die Schaltungsträgerabdeckung hält Substanzen, die von außerhalb des Gehäuses in einen Bereich eindringen, in dem Batterieanschlüsse angeordnet sind, davon ab, in Kontakt mit dem Schaltungsträger zu gelangen.

Vor diesem Hintergrund ist es eine Aufgabe der vorliegenden Erfindung, ein verbessertes Konzept für ein Akkupack für ein Elektrogerät anzugeben, durch das elektrische Komponenten im Inneren des Akkupacks zuverlässiger gegenüber eindringendem Wasser geschützt werden können.

Erfindungsgemäß wird diese Aufgabe gelöst durch den jeweiligen Gegenstand der unabhängigen Patentansprüche. Weitere Ausführungsformen und bevorzugte Ausgestaltungsformen sind Gegenstand der abhängigen Patentansprüche.

Das verbesserte Konzept beruht auf der Idee, zwischen einer Oberschale eines Außengehäuses des Akkupacks und einem Schaltungsträger des Akkupacks ein Dichtelement anzuordnen, das einen ersten Raumbereich innerhalb des Außengehäuses von einem zweiten Raumbereich innerhalb des Außengehäuses trennt, wobei der erste Raumbereich zur Umgebung des Akkupacks hin offen ist.

Gemäß dem verbesserten Konzept wird ein Akkupack für ein Elektrogerät angegeben, wobei das Akkupack ein Außengehäuse mit einer Unterschale sowie einer Oberschale aufweist. Die Unterschale weist einen Boden auf. Das Akkupack weist wenigstens eine Akkumulatorzelle auf, die in der Unterschale angeordnet ist. Das Akkupack weist einen Schaltungsträger auf, der auf einer dem Boden abgewandten Seite der wenigstens einen Akkumulatorzelle angeordnet ist. Das Akkupack weist ein Dichtelement auf, das zwischen der Oberschale und einer dem Boden abgewandten Seite des Schaltungsträgers angeordnet ist, wobei das Dichtelement einen ersten Raumbereich innerhalb des Außengehäuses flüssigkeitsdicht von einem zweiten Raumbereich innerhalb des Außengehäuses trennt. Der erste Raumbereich ist zu einer äußeren Umgebung des Akkupacks hin bezüglich eines Flüssigkeitsaustauschs offen.

Der Schaltungsträger kann auch als Träger für elektronische Bauteile bezeichnet werden oder als Leiterplatte beziehungsweise Platine.

Dass der Schaltungsträger auf der dem Boden abgewandten Seite der Akkumulatorzelle angeordnet ist, bedeutet nicht notwendigerweise, dass der Schaltungsträger in direktem Kontakt mit der Akkumulatorzelle steht. Vielmehr bezeichnet der Begriff "Seite" lediglich eine Richtung beziehungsweise einen Raumbereich bezüglich der Akkumulatorzelle. Mit anderen Worten ist die Seite nicht gleichbedeutend mit einer Oberfläche der Akkumulatorzelle.

Das Außengehäuse der Akkumulatorzelle kann beispielsweise eine im Wesentlichen quaderförmige Grundform aufweisen. Insbesondere können die Oberschale und die Unterschale jeweils eine Grundfläche oder Grundplatte aufweisen sowie eine Wandung, die sich senkrecht zu der jeweiligen Grundplatte erstreckt und diese umlaufend umgibt. Im montierten Zustand sind die Grundplatten der Oberschale und der Unterschale beispielsweise parallel oder im Wesentlichen parallel zueinander angeordnet. Die Grundplatte der Unterschale kann in diesem Zusammenhang als Boden der Unterschale bezeichnet werden, und die Grundplatte der Oberschale kann beispielsweise als Deckel der Oberschale bezeichnet werden.

Dass die wenigstens eine Akkumulatorzelle in der Unterschale angeordnet ist, kann beispielsweise derart verstanden werden, dass die wenigstens eine Akkumulatorzelle jeweils wenigstens zum Teil in der Unterschale angeordnet ist. Dies schließt jedoch nicht aus, dass die wenigstens eine Akkumulatorzelle auch über die Unterschale, insbesondere über die Wandung der Unterschale, hinaus übersteht und dementsprechend im montierten Zustand des Akkupacks auch teilweise in der Oberschale angeordnet sein kann oder sich in die Oberschale erstrecken kann.

Der Begriff "flüssigkeitsdicht" kann insbesondere als wasserdicht verstanden werden. Eine flüssigkeitsdichte Verbindung ist nach diesem Verständnis jedenfalls wasserdicht, kann jedoch auch gegenüber weiteren Flüssigkeiten und/oder Gasen dicht ausgestaltet sein. Insbesondere kann "flüssigkeitsdicht" auch wasserdicht sowie luftdicht beinhalten.

Mit anderen Worten kann das Dichtelement den ersten Raumbereich gas- und flüssigkeitsdicht, insbesondere luft- und wasserdicht oder jedenfalls wasserdicht, von dem zweiten Raumbereich trennen.

Das Dichtelement dichtet den ersten Raumbereich insbesondere bezüglich des zweiten Raumbereichs ab. Mit anderen Worten steht das Dichtelement im montierten Zustand des Akkupacks in mechanischer Wechselwirkung mit der Oberschale beziehungsweise dem Schaltungsträger und/oder sonstigen Komponenten des Akkupacks, sodass die flüssigkeitsdichte Trennung der Raumbereiche resultiert. Mit anderen Worten, wäre das Dichtelement nicht vorhanden, so wäre der erste Raumbereich nicht flüssigkeitsdicht von dem zweiten Raumbereich getrennt.

Das Dichtelement kann dabei beispielsweise in direktem Kontakt mit der Oberschale stehen.

Hier und im Folgenden bezeichnet der montierte Zustand des Akkupacks insbesondere einen Zustand, in dem das Akkupack selbst vollständig montiert ist und die Oberschale mit der Unterschale verbunden ist, sodass das Außengehäuse geschlossen ist. Im montierten Zustand ist das Akkupack also nicht notwendigerweise an dem Elektrogerät befestigt.

Die äußere Umgebung des Akkupacks kann insbesondere als Umgebung außerhalb des Außengehäuses angesehen werden. Dies kann auch als Definition des Außengehäuses aufgefasst werden. Mit anderen Worten trennt das Außengehäuse das Akkupack, insbesondere die wenigstens eine Akkumulatorzelle und den Schaltungsträger, von der äußeren Umgebung des Akkupacks räumlich ab.

Während der erste Raumbereich flüssigkeitsdicht von dem zweiten Raumbereich getrennt ist, kann es sein, dass die wenigstens eine Akkumulatorzelle und/oder der Schaltungsträger beziehungsweise auf dem Schaltungsträger montierte elektronische Komponenten nicht flüssigkeitsdicht von dem zweiten Raumbereich getrennt sind. Mit anderen Worten, wenn sich hypothetisch eine Flüssigkeit in dem zweiten Raumbereich befände, so könnte nicht ausgeschlossen werden, dass die Flüssigkeit auch in direkten Kontakt mit der wenigstens einen Akkumulatorzelle und/oder den elektrischen Komponenten gelangen würde. Nach dem verbesserten Konzept wird das Eindringen von Flüssigkeit in den zweiten Raumbereich von außerhalb des Außengehäuses durch das Dichtelement verhindert.

Auf dem Schaltungsträger können verschiedene elektronische Komponenten zum Betrieb des Akkupacks und/oder des Elektrogeräts montiert sein. Beispielsweise kann der Schaltungsträger logische Schaltkreise oder Messschaltkreise und/oder Sensorkomponenten tragen. Die Sensorkomponenten können beispielsweise einen Strom- und/oder einen Spannungssensor und so weiter beinhalten, und die Messschaltungen können zum Auswerten der entsprechenden Sensorsignale ausgelegt sein.

Die elektronischen Komponenten können auch zur Spannungsregelung dienen oder zur Kommunikation des Akkupacks mit dem Elektrogerät dienen. Die elektronischen Komponenten können beispielsweise auch ein Batteriemanagementsystem, BMS, des Akkupacks beinhalten. Insbesondere können die elektronischen Komponenten auch einen oder mehrere Leistungsschalter, beispielsweise Leistungstransistoren, beinhalten, um einen Stromfluss von der wenigstens einen Akkumulatorzelle zu dem Elektrogerät zu schalten.

Bei dem Elektrogerät kann es sich insbesondere um ein Gerät handeln, welches durch das Akkupack, insbesondere durch die in der wenigstens einen Akkumulatorzelle gespeicherte Energie, elektrisch versorgt werden soll, also beispielsweise um ein elektrisches Haushaltsgerät, ein Elektrowerkzeug oder einen Elektromotor, beispielsweise für ein elektrisch betreibbares Fahrrad.

Das Elektrogerät kann aber auch einem Gerät entsprechen, das der wenigstens einen Akkumulatorzelle elektrische Energie bereitstellt, also beispielsweise einem Ladegerät für das Akkupack.

Durch die flüssigkeitsdichte Trennung des ersten Raumbereichs von dem zweiten Raumbereich gemäß einem Akkupack nach dem verbesserten Konzept wird verhindert, dass Flüssigkeit, insbesondere Wasser, welches von außerhalb des Außengehäuses in den ersten Raumbereich eindringt, weil der erste Raumbereich notwendigerweise gegenüber der äußeren Umgebung offen ist, in den zweiten Raumbereich eindringt und auf diese Weise in Kontakt mit elektrischen Komponenten auf dem Schaltungsträger beziehungsweise mit der wenigstens einen Akkumulatorzelle gelangt. Dadurch wird die funktionale Sicherheit des Akkupacks erhöht, und eine Beschädigung oder Zerstörung des Akkupacks oder des Elektrogeräts wird verhindert.

Indem der erste Raumbereich bezüglich eines Flüssigkeitsaustauschs offen gegenüber der äußeren Umgebung ist, kann eingedrungenes Wasser auch wieder aus dem Außengehäuse abfließen. Dadurch wird verhindert, dass längerfristig Wasseransammlungen im Inneren des Außengehäuses auftreten.

Durch die Anordnung des Dichtelements zwischen der Oberschale und der dem Boden abgewandten Seite des Schaltungsträgers wird eine besonders platzsparende Anordnung ermöglicht, sodass insbesondere kein vergrößerter Bauraum des Akkupacks erforderlich ist, um die Sicherheit beziehungsweise Abdichtung des Akkupacks wie beschrieben zu verbessern.

Gemäß zumindest einer Ausführungsform des Akkupacks nach dem verbesserten Kontakt ist der zweite Raumbereich zu der äußeren Umgebung des Akkupacks hinsichtlich eines Flüssigkeitsaustauschs geschlossen.

Gemäß zumindest einer Ausführungsform ist der zweite Raumbereich zu der wenigstens einen Akkumulatorzelle hin bezüglich eines Flüssigkeitsaustauschs offen.

Gemäß zumindest einer Ausführungsform enthält das Akkupack einen Zellhalter, der wenigstens teilweise in der Unterschale angeordnet ist und der die wenigstens eine Akkumulatorzelle hält.

Gemäß zumindest einer Ausführungsform enthält das Dichtelement ein volumenausgleichendes Dichtmaterial, beispielsweise ein Elastomer oder ein Schaummaterial, insbesondere ein Weichschaummaterial.

Gemäß zumindest einer Ausführungsform ist wenigstens ein Leistungsschalter, insbesondere ein Leistungstransistor, in dem zweiten Raumbereich angeordnet und elektrisch mit dem Schaltungsträger verbunden beziehungsweise auf dem Schaltungsträger montiert.

Gemäß zumindest einer Ausführungsform weist das Akkupack einen Verriegelungsmechanismus zur mechanischen Befestigung des Akkupacks an dem Elektrogerät beziehungsweise zum Lösen dieser Befestigung auf. Der Verriegelungsmechanismus ist wenigstens zum Teil in dem ersten Raumbereich angeordnet. Insbesondere ist eine bewegliche Komponente des Verriegelungsmechanismus wenigstens zum Teil in dem ersten Raumbereich angeordnet.

Neben Kontaktelementen zur elektrischen Kontaktierung des Elektrogeräts mit dem Akkupack steht auch der Verriegelungsmechanismus notwendigerweise wenigstens zum Teil in Kontakt mit der äußeren Umgebung, da er durch einen Benutzer betätigbar sein muss. Demzufolge stellt auch die bewegliche Komponente des Verriegelungsmechanismus eine potenzielle Möglichkeit für eindringendes Wasser dar. Durch die Anordnung in dem ersten Raumbereich wird auch auf diese Weise eingedrungenes Wasser von dem zweiten Raumbereich ferngehalten.

Gemäß zumindest einer Ausführungsform enthält das Akkupack ein weiteres Dichtelement, das zwischen der Oberschale und der dem Boden abgewandten Seite des Schaltungsträgers angeordnet ist und das den ersten Raumbereich flüssigkeitsdicht von einem weiteren zweiten Raumbereich innerhalb des Außengehäuses trennt.

Der weitere zweite Raumbereich kann beispielsweise zu einer elektronischen Komponente auf dem Schaltungsträger hin bezüglich eines Flüssigkeitsaustauschs offen sein.

Das Akkupack enthält eine Dichtschicht, die auf einer dem Boden abgewandten Oberfläche des Schaltungsträgers, insbesondere einer Grundplatte des Schaltungsträgers, angeordnet ist. Die Dichtschicht besteht aus einem flüssigkeitsdichten Material und erstreckt sich sowohl in den ersten Raumbereich als auch in den zweiten Raumbereich. Das Dichtelement steht in direktem Kontakt mit der Dichtschicht, um den ersten Raumbereich flüssigkeitsdicht von dem zweiten Raumbereich zu trennen.

Beispielsweise kann die Oberschale das Dichtelement auf die Dichtschicht pressen.

Die dem Boden abgewandte Oberfläche des Schaltungsträgers kann insbesondere als Bestandteil des Schaltungsträgers aufgefasst werden, sodass die Dichtschicht in direktem Kontakt mit dieser Oberfläche steht.

Die Dichtschicht kann auch als Teil des Schaltungsträgers aufgefasst werden.

Die Dichtschicht enthält beispielsweise ein Kunststoffmaterial oder ein Vergussmaterial, insbesondere ein wasserdichtes und hydrophobes Material, oder besteht aus einem solchen Material.

Die Dichtschicht kann insbesondere ein Silikon und/oder ein Polyurethan beinhalten.

Die Dichtschicht kann auch als Dickschicht bezeichnet oder ausgestaltet sein.

Insbesondere kann die Dichtschicht eine oder mehrere elektronische Komponenten, die auf dem Schaltungsträger montiert sind, insbesondere auf der Grundplatte, flüssigkeitsdicht vergießen oder umschließen, sodass von dem ersten und/oder dem zweiten Raumbereich keine Flüssigkeit zu diesen elektronischen Bauteilen gelangen kann.

Durch die Dichtschicht wird die Oberfläche des Schaltungsträgers, insbesondere der Grundplatte, wasserdicht versiegelt, sodass ein erhöhter Schutz für die elektronischen Komponenten gegenüber eindringendem Wasser gewährleistet wird. Außerdem bietet die Dichtschicht ein ideales Substrat für das Dichtelement, indem sie eine homogene, ebene und dichte Berührungsfläche zwischen dem Dichtelement und dem Schaltungsträger schafft. Dadurch kann die flüssigkeitsdichte Trennung zwischen dem ersten und dem zweiten Raumbereich besonders zuverlässig realisiert werden.

Gemäß zumindest einer Ausführungsform bedeckt die Dichtschicht, alleine oder in Kombination mit einer weiteren Dichtkomponente des Akkupacks, die dem Boden abgewandte Oberfläche des Schaltungsträgers, insbesondere der Grundplatte, innerhalb des ersten Raumbereichs vollständig.

Gemäß zumindest einer Ausführungsform enthält das Akkupack ein Begrenzungselement, insbesondere ein flüssigkeitsdichtes Begrenzungselement, das auf der dem Boden abgewandten Seite der Grundplatte des Schaltungsträgers, insbesondere entlang eines Randes der Grundplatte, aufgebracht oder angeordnet ist. Durch das Begrenzungselement wird ein Bereich auf der dem Boden abgewandten Seite der Grundplatte definiert, der durch die Dichtschicht belegt oder durch das Material der Dichtschicht vergossen ist.

Beispielsweise kann die Dichtschicht in Kombination mit dem Begrenzungselement den Schaltungsträger beziehungsweise die dem Boden abgewandte Oberfläche des Schaltungsträgers beziehungsweise der Grundplatte im ersten Raumbereich vollständig bedecken.

Das Begrenzungselement kann dabei als Dichtraupe ausgestaltet sein.

Gemäß zumindest einer Ausführungsform ist das Dichtelement stoffschlüssig mit der Oberschale verbunden, beispielsweise mit der Oberschale verklebt.

Gemäß zumindest einer Ausführungsform ist das Dichtelement kraftschlüssig mit der Dichtschicht verbunden, wird also insbesondere durch die Oberschale auf die Dichtschicht gepresst.

Gemäß zumindest einer Ausführungsform weist die Oberschale einen Steg auf, der insbesondere an einer Innenseite der Oberschale angeordnet ist, und das Dichtelement ist zwischen dem Steg und der Dichtschicht angeordnet.

Gemäß zumindest einer Ausführungsform wird das Dichtelement von dem Steg auf die Dichtschicht gepresst.

Das Dichtelement kann beispielsweise stoffschlüssig mit dem Steg verbunden sein, beispielsweise mit dem Steg verklebt sein.

Der Steg kann beispielsweise als Vorsprung der Oberschale in das Innere des Außengehäuses ausgestaltet sein.

Durch den Steg kann gezielt Kraft auf das Dichtelement aufgebracht werden, sodass eine kontinuierliche Abdichtung und eine dichte Verbindung zwischen dem Dichtelement und der Dichtschicht erzielt wird.

Die Kraft kann beispielsweise durch eine Verbindung der Oberschale mit der Unterschale, beispielsweise eine Klemmverbindung oder eine Rastverbindung, erreicht werden.

Gemäß zumindest einer Ausführungsform enthält das Dichtelement eine Dichtraupe oder besteht aus einer oder mehreren Dichtraupen.

Dadurch wird es insbesondere ermöglicht, das Dichtelement hochautomatisiert zu applizieren und nahezu beliebige räumliche Verläufe der Dichtraupe zu realisieren. Insbesondere kann das Dichtelement auch dreidimensional verlaufen.

Beispielsweise kann das Dichtelement als direktaufgebrachte Schaumdichtung (englisch "formed in-place foam gaskets") ausgestaltet sein. Der Prozess, eine solche Dichtraupe zu applizieren, wird auch entsprechend der englischen Bezeichnung als "FIPFG" bezeichnet.

Die Dichtraupe kann insbesondere entlang des Stegs auf die Oberschale aufgebracht sein oder entlang eines definierten Pfades auf die Oberschale beziehungsweise auf die Dichtschicht aufgebracht sein.

Gemäß zumindest einer Ausführungsform enthält das Dichtelement ein Schaummaterial, also ein geschäumtes Material, insbesondere einen Kunststoffschaum, beispielsweise einen Polyurethanschaum oder einen Silikonschaum.

Das Dichtelement kann daher auch als Dichtschaum und in entsprechenden Ausführungsformen als Dichtschaumraupe oder Schaumraupe, ausgestaltet sein.

Insbesondere handelt es sich bei dem Schaummaterial um ein einkomponentiges Schaummaterial.

In solchen Ausführungsformen ist eine besonders einfache Verarbeitung und Herstellung des Akkupacks möglich. Insbesondere ist bei einkomponentigen Materialien gegebenenfalls keine chemische Aushärtung erforderlich, was eine vereinfachte Prozessführung bei der Herstellung des Akkupacks ermöglicht.

Durch die Verwendung eines Schaummaterials kann das Dichtelement als ein volumenausgleichendes und verpressbares Dichtelement ausgestaltet werden, das sich besonders dicht schließend auf die Dichtschicht legt. So können gegebenenfalls Unebenheiten in der Dichtschicht ausgeglichen werden.

Gemäß zumindest einer Ausführungsform enthält das Akkupack eine Kontakteinheit zur elektrischen Kontaktierung des Elektrogeräts, insbesondere zur elektrischen Kontaktierung des Elektrogeräts mit dem Akkupack und der wenigstens einen Akkumulatorzelle. Die Kontakteinheit ist in dem ersten Raumbereich oder teilweise in dem ersten Raumbereich auf dem Schaltungsträger angeordnet.

Insbesondere ist die Kontakteinheit elektrisch mit dem Schaltungsträger verbunden, insbesondere mit der Grundplatte des Schaltungsträgers.

Die Kontakteinheit kann beispielsweise ausschließlich im ersten Raumbereich mit dem Schaltungsträger beziehungsweise der Grundplatte elektrisch verbunden sein, und eine elektrische Kontaktierung der Kontakteinheit mit dem Schaltungsträger kann vollständig außerhalb des zweiten Raumbereichs erfolgen.

Die Kontakteinheit kann beispielsweise einen oder mehrere Kontaktelemente zur elektrischen Kontaktierung des Elektrogeräts mit der wenigstens einen Akkumulatorzelle und/oder sonstigen Komponenten auf dem Schaltungsträger beinhalten. Die Kontakteelemente können beispielsweise als Klemmkontakte, Schwertkontakte oder Tulpenkontakte ausgestaltet sein. Die Kontakteinheit kann auch als Klemmblock ausgestaltet sei.

Die Kontakteinheit kann sich insbesondere teilweise senkrecht zu dem Schaltungsträger erstrecken und insbesondere auch teilweise aus dem ersten Raumbereich herausragen, um die elektrische Kontaktierung mit dem Elektrogerät zu ermöglichen.

Die Kontakteinheit steht, wie oben beschrieben, notwendigerweise in Kontakt mit der äußeren Umgebung des Akkupacks. Durch solche Ausführungsformen kann die Kontakteinheit sicher von dem zweiten Raumbereich abgetrennt werden, sodass Wasser, das möglicherweise über die Kontakteinheit in den ersten Raumbereich eindringt, dennoch von elektrischen Komponenten auf dem Schaltungsträger und/oder der wenigstens einen Akkumulatorzelle ferngehalten wird.

Gemäß zumindest einer Ausführungsform enthält das Akkupack ein Schaumstoffteil, das die Kontakteinheit gegenüber der äußeren Umgebung verdeckt, beispielsweise vollständig verdeckt, sofern die Kontakteinheit nicht kontaktiert ist, also das Akkupack von dem Elektrogerät getrennt ist. Das Schaumstoffteil weist wenigstens einen Einsteckschlitz zum Einstecken eines Kontaktelements des Elektrogeräts in ein entsprechendes Kontaktelement der Kontakteinheit auf.

Dass die Kontakteinheit durch das Schaumstoffteil gegenüber der äußeren Umgebung verdeckt wird, kann insbesondere derart verstanden werden, dass kein direkter Kontakt zwischen der Kontakteinheit beziehungsweise den Kontakten der Kontakteinheit und der äußeren Umgebung des Akkupacks besteht.

Im nicht-kontaktierten Zustand sind die Einsteckschlitze insbesondere geschlossen. Wird das Kontaktelement des Elektrogeräts, das beispielsweise als Schwertkontakt oder dergleichen ausgestaltet sein kann, in den Einsteckschlitz gesteckt, so kann möglicherweise an dem Kontaktelement des Elektrogeräts befindliches Wasser durch das Schaumstoffteil abgestreift werden.

Dadurch wird die Menge an über die Kontakteinheit in den Raumbereich eingetragener Flüssigkeit reduziert.

Gemäß zumindest einer Ausführungsform enthält das Schaumstoffteil ein geschlossenporig geschäumtes Material und ist insbesondere wasserdicht ausgestaltet.

Gemäß zumindest einer Ausführungsform sind die Einsteckschlitze selbstverschließend ausgebildet.

Gemäß zumindest einer Ausführungsform weist das Außengehäuse eine oder mehrere Drainageöffnungen auf, durch welche eine Flüssigkeit von dem ersten Raumbereich in die äußere Umgebung ablaufen kann.

Dadurch wird verhindert, dass eine längerfristige Ansammlung von Flüssigkeit in dem ersten Raumbereich entsteht.

Gemäß dem verbesserten Konzept wird auch ein Elektrogerät mit einem Akkupack nach dem verbesserten Konzept angegeben.

Gemäß dem verbesserten Konzept wird auch ein Verfahren zur Herstellung eines Akkupacks für ein Elektrogerät angegeben. Es wird eine Unterschale für ein Außengehäuse des Akkupacks bereitgestellt, wobei die Unterschale einen Boden aufweist. Wenigstens eine Akkumulatorzelle wird in der Unterschale angeordnet. Ein Schaltungsträger wird auf einer dem Boden abgewandten Seite der wenigstens einen Akkumulatorzelle angeordnet, und eine Oberschale für das Außengehäuse wird bereitgestellt. Ein Dichtelement wird zwischen der Oberschale und einer dem Boden abgewandten Seite des Schaltungsträgers angeordnet, und die Oberschale wird mit der Unterschale verbunden. Das Dichtelement wird dabei derart angeordnet, dass es einen ersten Raumbereich innerhalb des Außengehäuses flüssigkeitsdicht von einem zweiten Raumbereich innerhalb des Außengehäuses trennt, nachdem beziehungsweise wenn die Oberschale mit der Unterschale verbunden ist beziehungsweise wurde. Der erste Raumbereich ist dabei zu einer äußeren Umgebung des Akkupacks hin bezüglich eines Flüssigkeitsaustauschs offen. Die Verbindung der Oberschale mit der Unterschale kann insbesondere stoffschlüssig und/oder formschlüssig erfolgen. Beispielsweise kann die Oberschale mit der Unterschale verklebt werden.

Es wird darauf hingewiesen, dass die genannten Verfahrensschritte nicht notwendigerweise in der genannten Reihenfolge durchgeführt werden, sondern auch in einer anderen, aus technischer Sicht sinnvollen, Reihenfolge durchgeführt werden können.

Die formschlüssige Verbindung der Oberschale mit der Unterschale kann beispielsweise durch eine oder mehrere Klemmverbindungen oder Rastverbindungen erfolgen.

In verschiedenen Ausgestaltungsformen können die Oberschale und die Unterschale auch mittels eines oder mehrerer Scharniere schwenkbar miteinander verbunden sein, sodass das Außengehäuse einfach und zerstörungsfrei geöffnet werden kann.

Gemäß zumindest einer Ausführungsform des Verfahrens nach dem verbesserten Konzept wird wenigstens ein Teil des Dichtelements als Dichtraupe auf den Schaltungsträger oder auf die Oberschale aufgebracht.

Insbesondere wird das Dichtelement mittels **FIPFG** auf den Schaltungsträger oder die Oberschale appliziert.

Solche Verfahren zeichnen sich durch einen besonders hohen und flexiblen Automatisierbarkeitsgrad aus.

Es wird ein, insbesondere flüssigkeitsdichtes, Begrenzungselement auf eine dem Boden abgewandte Seite einer Grundplatte des Schaltungsträgers aufgebracht, insbesondere entlang eines Randes der Grundplatte. Ein durch das Begrenzungselement wenigstens zum Teil begrenzter Bereich der dem Bogen abgewandten Seite der Grundplatte wird mit einem Vergussmaterial beschichtet, um eine Dichtschicht zu erzeugen. Der beschichtete Bereich erstreckt sich dabei sowohl in dem ersten Raumbereich als auch in dem zweiten Raumbereich.

Das Dichtelement kann beispielsweise als Dichtraupe auf die Dichtschicht aufgebracht werden.

Das Begrenzungselement kann dabei beispielsweise als weitere Dichtraupe, insbesondere aus einem Schaummaterial, insbesondere einem Silikonschaum oder einem Polyurethanschaum, ausgestaltet sein und kann beispielsweise ebenfalls mittels FIPFG aufgebracht werden.

Durch das Begrenzungselement kann der zu vergießende Bereich exakt definiert werden, sodass eine gezielte und zuverlässige Beschichtung der Grundplatte mit der Dichtschicht erzielt werden kann.

Gemäß zumindest einer Ausführungsform wird das Dichtelement, insbesondere durch das Verbinden der Oberschale mit der Unterschale, zwischen der Oberschale und der Dichtschicht verpresst oder von der Oberschale auf die Dichtschicht gepresst.

Gemäß zumindest einer Ausführungsform wird das Dichtelement auf die Dichtschicht aufgebracht, um das Dichtelement zwischen der Oberschale und der dem Boden abgewandten Seite des Schaltungsträgers anzuordnen.

Gemäß zumindest einer Ausführungsform wird das Dichtelement auf die Oberschale aufgebracht, um das Dichtelement zwischen der Oberschale und der dem Boden abgewandten Seite des Schaltungsträgers anzuordnen.

Gemäß zumindest einer Ausführungsform wird das Dichtelement zwischen der Dichtschicht und einem Steg der Oberschale angeordnet.

Gemäß zumindest einer Ausführungsform wird das Dichtelement, insbesondere als Dichtraupe, auf den Steg aufgebracht.

Indem das Dichtelement als Dichtraupe auf den Steg aufgebracht wird und in der Folge auf die Dichtschicht gepresst wird, lässt sich eine Position des Dichtelements genau bestimmen und damit eine genaue räumliche Definition des ersten Raumbereichs realisieren.

Gemäß zumindest einer Ausführungsform wird das Dichtelement von dem Steg auf die Dichtschicht gepresst, insbesondere nachdem beziehungsweise indem die Oberschale mit der Unterschale verbunden wird.

Weitere Ausgestaltungsformen des Verfahrens nach dem verbesserten Konzept ergeben sich direkt aus dem verschiedenen Ausgestaltungsformen des Akkupacks nach dem verbesserten Konzept und umgekehrt.

Die vorstehend in der Beschreibung genannten Merkmale und Merkmalskombinationen sowie die nachfolgend in der Figurenbeschreibung genannten und/oder in den Figuren alleine gezeigte Merkmale und Merkmalskombinationen sind nicht nur in der jeweils angegebenen Kombination, sondern auch in anderen Kombinationen verwendbar, ohne den Rahmen des verbesserten Konzepts zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- Fig. 1: eine schematische Darstellung eines Teils einer beispielhaften Ausführungsform eines Akkupacks nach dem verbesserten Konzept sowie einen Verfahrensschritt gemäß einer beispielhaften Ausführungsform eines Verfahrens nach dem verbesserten Konzept;
- Fig. 2: eine schematische Darstellung eines Teils einer beispielhaften Ausführungsform eines Akkupacks nach dem verbesserten Konzept sowie einen Verfahrensschritt gemäß einer beispielhaften Ausführungsform eines Verfahrens nach dem verbesserten Konzept;
- Fig. 3: eine schematische Darstellung eines Teils einer beispielhaften Ausführungsform eines Akkupacks nach dem verbesserten Konzept sowie einen Verfahrensschritt gemäß einer beispielhaften Ausführungsform eines Verfahrens nach dem verbesserten Konzept;
- Fig. 4: eine schematische Darstellung eines Teils einer beispielhaften Ausführungsform eines Akkupacks nach dem verbesserten Konzept sowie einen Verfahrensschritt gemäß einer beispielhaften Ausführungsform eines Verfahrens nach dem verbesserten Konzept;
- Fig. 5: eine schematische Darstellung eines Teils einer beispielhaften Ausführungsform eines Akkupacks nach dem verbesserten Konzept sowie einen Verfahrensschritt gemäß einer beispielhaften Ausführungsform eines Verfahrens nach dem verbesserten Konzept;
- Fig. 6: eine schematische Darstellung eines Teils einer beispielhaften Ausführungsform eines Akkupacks nach dem verbesserten Konzept sowie einen Verfahrensschritt gemäß einer beispielhaften Ausführungsform eines Verfahrens nach dem verbesserten Konzept;
- Fig. 7: eine schematische Darstellung einer beispielhaften Ausführungsform eines Akkupacks nach dem verbesserten Konzept sowie einen weiteren Schritt eines Verfahrens gemäß einer beispielhaften Ausführungsform nach dem verbesserten Konzept; und
- Fig. 8: eine Schnittdarstellung durch das Akkupack der Fig. 7.

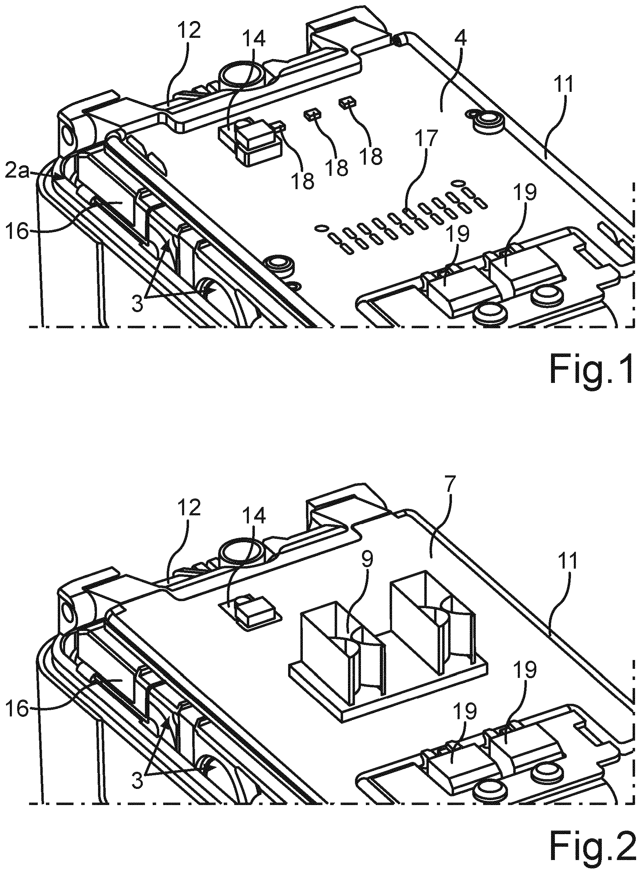

In den Fig. 1 bis Fig. 8 sind beispielhafte Ausführungsformen eines Akkupacks 1 beziehungsweise Teile des Akkupacks 1 gemäß dem verbesserten Konzept schematisch dargestellt. Die Figuren Fig. 1 bis Fig. 8 können auch als verschiedene Zwischenstufen bei der Herstellung eines Akkupacks 1 nach einem Verfahren gemäß dem verbesserten Konzept aufgefasst werden.

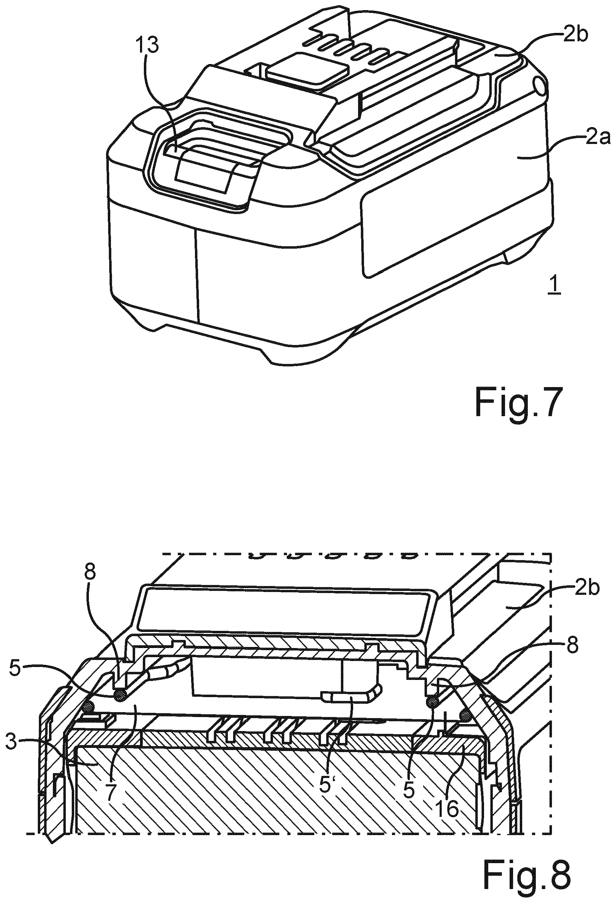

**In** Fig. 7 ist das fertiggestellte Akkupack 1 im vollständig montierten Zustand dargestellt. Das Akkupack 1 weist ein Außengehäuse mit einer Unterschale 2a und einer Oberschale 2b auf. Es ist ein Taster 13 zum Entriegeln einer Verbindung zwischen einem Elektrogerät (nicht gezeigt) und dem Akkupack 1 vorgesehen.

Die Unterschale 2a kann beispielsweise aus einem ein- oder mehrteiligen Kunststoffkörper bestehen, der insbesondere wenigstens eine Akkumulatorzelle 3 aufnimmt. Die wenigstens eine Akkumulatorzelle 3 kann dabei beispielsweise von einem Zellhalter 16 gehalten werden (siehe Fig. 1, Fig. 2, Fig. 4 sowie Fig. 8).

In Fig. 1 ist die Unterschale 2a dargestellt, wobei die wenigstens eine Akkumulatorzelle 3 in dem Zellhalter 16 in der Unterschale 2a angeordnet ist. Die Oberschale 2b ist in der Fig. 1 noch nicht angebracht. Eine Leiterplatte 4 ist auf einer dem Boden abgewandten Seite der wenigstens einen Akkumulatorzelle 3 beziehungsweise des Zellhalters 16 angeordnet. Beispielsweise kann die Leiterplatte 4 anhand von Schraubverbindungen oder sonstigen Verbindungen mit dem Zellhalter 16 verbunden sein. Diese Schraubverbindungen können insbesondere abgedichtet sein gegenüber eindringendem Wasser. Auch kann der Zellhalter 16 beispielsweise gegenüber dem Außengehäuse 2a, 2b abgedichtet sein.

Auf der Leiterplatte 4, insbesondere auf der dem Boden abgewandten Seite der Leiterplatte 4, können elektronische Komponenten 14, 18, 19 montiert sein, von denen der Übersichtlichkeit halber nur einzelne gezeigt sind.

Die elektronischen Komponenten 14, 18, 19 können beispielsweise einen Taster 14, Leistungs-MOSFETs 19 und/oder sonstige elektronische Komponenten 18 beinhalten.

Auf der Oberfläche der Leiterplatte 4 sind außerdem Verbindungskontakte 17 zur Kontaktierung einer Kontakteinheit 9 (siehe Fig. 2) vorgesehen.

Das Akkupack 1 kann auch einen Verriegelungsmechanismus 12 aufweisen, durch dessen mechanische Betätigung, beispielsweise mittels des Tasters 13, das Akkupack 1 von dem Elektrogerät getrennt werden kann.

In Fig. 1 ist außerdem eine erste Dichtraupe dargestellt, die beispielsweise entlang eines Randes der Leiterplatte 4 appliziert werden kann und beispielsweise aus einem Silikon-basierten oder Polyurethan-basierten Schaummaterial bestehen kann. Durch die Dichtraupe wird daher ein Begrenzungselement 11 geschaffen, das einen Bereich auf der Oberfläche der Leiterplatte 4 definiert.

Daraufhin kann dieser Bereich mittels eines Vergussmaterials beschichtet werden, um eine Dichtschicht 7 zu erzeugen, welche die Oberfläche in dem so definierten Bereich bedeckt.

Die Kontakteinheit 9 kann insbesondere vor dem Aufbringen des Vergussmaterials montiert werden.

Durch die Dichtschicht 7 kann ein Teil der elektronischen Komponenten 18 beispielsweise vollständig vergossen werden. Andere Komponenten, wie beispielsweise der Taster 14 oder die Leistungs-MOSFETs 19, können beispielsweise jedoch freiliegen.

Die Dichtschicht 7 kann beispielsweise über einen mechanisch positionierten Applikator auf die Leiterplatte 4 aufgebracht werden. Die Dichtschicht 7 kann dabei ebenfalls Silikon- oder einen Polyurethan-basierten Werkstoff beinhalten beziehungsweise aus einem solchen bestehen. Dadurch wird eine wasserdichte und wasserabweisende Beschichtung erzeugt.

Das Vergussmaterial ist dabei insbesondere derart gewählt, dass es beim Aufbringen wenigstens zähfließend ist und die entsprechenden Bauteilstrukturen auf der Leiterplatte 4 so abdeckt, dass eine möglichst homogene Oberfläche in weiten Bereichen auf der Leiterplatte 4 entsteht.

Im Bereich der Kontakteinheit 9 können gegebenenfalls unterschiedliche Applikationsdüsen verwendet werden, um die Beschichtung derart aufzubringen, dass die Kontakteinheit 9 lateral vollständig umschlossen wird. Dadurch kann ein eindringendes Wasser, insbesondere über die Kontakteinheit 9 in das Innere des Außengehäuses 2a, 2b eindringendes Wasser, über die Kontakteinheit 9 abfließen und gelangt insbesondere nicht durch die Kontakteinheit 9 auf die darunterliegende Leiterplatte 4.

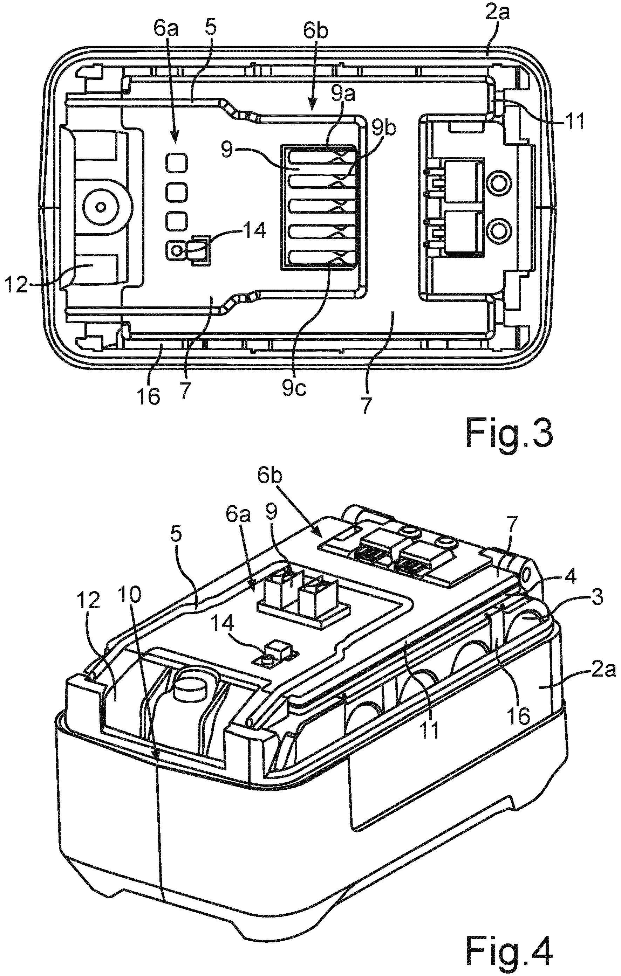

Nachdem die Dichtschicht 7 aufgebracht wurde, wird ein Dichtelement 5 auf die Dichtschicht 7 aufgebracht, insbesondere in Form einer Schaumraupe, wie in den Figuren Fig. 3 und Fig. 4 dargestellt.

In der gezeigten Ausführungsform wird das Dichtelement 5 auch teilweise im Bereich des Verriegelungsmechanismus 12 angeordnet.

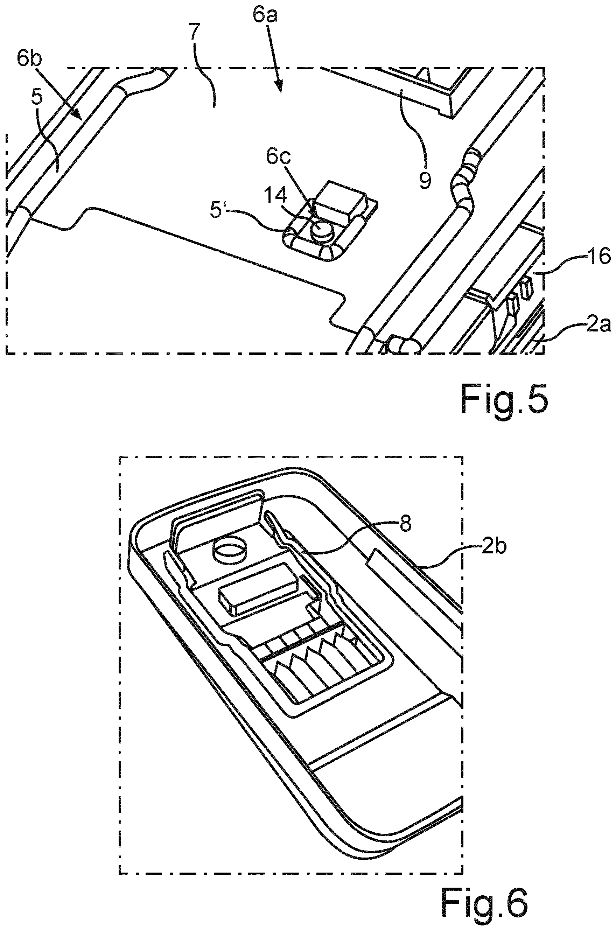

Je nach Ausführungsform des Verfahrens kann das Dichtelement 5 jedoch auch auf die Oberschale 2b aufgebracht werden, insbesondere auf einen Steg 8 der Oberschale 2b, wie er in Fig. 6 und Fig. 8 schematisch dargestellt ist.

Das Dichtelement 5 kann beispielsweise als Schaumraupe entlang eines Ausbruchs für die Gehäuseverriegelung der Ober- und Unterschale 2a, 2b sowie im Bereich von entsprechenden Ausbrüchen für die Kontakteinheit 9 aufgebracht werden, wie ebenfalls anhand des Verlaufs des Stegs 8 in Fig. 6 ersichtlich.

Die Schaumraupe wird dabei im Wesentlichen in horizontaler Richtung appliziert, kann aber, insbesondere im Bereich des Verriegelungsmechanismus 12, auch schräg oder vertikal zur Oberschale 2b oder zum Boden der Unterschale 2a verlaufen.

Indem die Oberschale 2b mit der Unterschale 2a verbunden wird, um das Außengehäuse 2a, 2b zu schließen, wird das Dichtelement 5 gegen die Dichtschicht 7 verpresst. Damit entsteht durch das Dichtelement 5 faktisch ein wenigstens teilweise umschlossener erster Raumbereich 6a, der bezüglich einer äußeren Umgebung des Akkupacks 1 beziehungsweise des Außengehäuses 2a, 2b offen hinsichtlich eines Flüssigkeitsaustauschs ist. Ein zweiter Raumbereich 6b ist dagegen flüssigkeitsdicht von dem ersten Raumbereich 6a abgetrennt. Der zweite Raumbereich 6b kann beispielsweise nahezu hermetisch gegen die äußere Umgebung des Akkupacks 1 abgeschlossen sein.

Wasser oder sonstige Medien, die im Betrieb des Akkupacks 1 oder des Elektrogeräts über die Öffnungen der Kontakteinheit 9 oder über den Verriegelungsmechanismus 12 in den ersten Raumbereich 6a eindringen, werden zwischen dem Dichtelement 5 und der Dichtschicht 7 definiert geführt und insbesondere von dem zweiten Raumbereich 6b ferngehalten.

Wie in Fig. 4 angedeutet, weist das Akkupack 1 beispielsweise unterhalb des Verriegelungsmechanismus 12 eine oder mehrere Drainageöffnungen 10 zur Entwässerung des ersten Raumbereichs 6a auf.

Wie bezüglich des Dichtelements 5 beschrieben, können auch weitere Dichtelemente 5' als entsprechende Schaumraupen oder dergleichen auf die Oberschale 2b oder die Dichtschicht 7 aufgebracht werden, wie in Fig. 5 angedeutet. Dadurch kann ein weiterer zweiter Raumbereich 6c definiert werden, der ebenfalls flüssigkeitsdicht von dem ersten Raumbereich abgetrennt ist. Dadurch können spezifische Komponenten, wie beispielsweise der Taster 14, die aus funktionalen Gründen nicht durch die Dichtschicht 7 vollständig vergossen werden können, von dem ersten Raumbereich 6a abgetrennt werden, um ein Eindringen von Wasser auf den darunterliegenden Bereich der Leiterplatte 4 zu verhindern.

In Fig. 8 ist eine Schnittdarstellung durch das fertig montierte Akkupack 1 der Fig. 7 gezeigt. Hier ist nochmals ersichtlich, wie das Dichtelement 5 und gegebenenfalls das weitere Dichtelement 5' durch den Steg 8 der Oberschale 2b auf die Dichtschicht 7 gepresst werden.

In verschiedenen Ausführungsformen kann über der Kontakteinheit 9 beziehungsweise den Kontaktelementen 9a, 9b, 9c der Kontakteinheit 9, ein Formschaumstoffbauteil (nicht gezeigt) angeordnet sein, welches insbesondere geschlossenporig geschäumt und damit wasserdicht ausgestaltet ist. Das Formschaumstoffbauteil weist Einsteckschlitze für Steckkontaktbleche des Elektrowerkzeugs beziehungsweise eines Ladegeräts für das Akkupack 1 auf. Die Steckkontaktbleche werden beim Einstecken durch das Formschaumstoffbauteil abgestreift. Damit wird vermieden, dass Flüssigkeit oder Feuchtigkeit an den Steckkontaktblechen der Werkzeuge oder des Ladegeräts in den Bereich der Kontakteinheit 9 eingebracht wird.

Wie beschrieben, erlaubt es das verbesserte Konzept, ein Akkupack mit einer verbesserten Abdichtung kritischer Bereiche gegenüber eindringendem Wasser anzugeben und damit die Sicherheit, insbesondere die funktionale Sicherheit des Akkupacks, zu verbessern.

### BEZUGSZEICHENLISTE:

- 1: Akkupack
- 2a: Unterschale
- 2b: Oberschale
- 3: Akkumulatorzelle
- 4: Leiterplatte
- 5, 5': Dichtelement
- 6a, 6b, 6c: Raumbereich
- 7: Dichtschicht
- 8: Steg
- 9: Kontakteinheit
- 9a, 9b, 9c: Kontaktelemente
- 10: Drainageöffnung
- 11: Begrenzungselement
- 12: Verriegelungsmechanismus
- 13, 14: Taster
- 16: Zellhalter
- 17: Verbindungskontakte
- 18: elektronische Komponente
- 19: Leistungs-MOSFET

## Patentansprüche

1. Akkupack für ein Elektrogerät, wobei
- das Akkupack (1) ein Außengehäuse (2a, 2b) mit einer Unterschale (2a), die einen Boden aufweist, sowie einer Oberschale (2b) aufweist;
- das Akkupack (1) wenigstens eine Akkumulatorzelle (3) aufweist, die in der Unterschale (2a) angeordnet ist;
- das Akkupack (1) einen Schaltungsträger (4, 7) aufweist, der auf einer dem Boden abgewandten Seite der wenigstens einen Akkumulatorzelle (3) angeordnet ist;
- das Akkupack (1) ein Dichtelement (5) aufweist, das zwischen der Oberschale (2b) und einer dem Boden abgewandten Seite des Schaltungsträgers (4, 7) angeordnet ist, wobei
- das Dichtelement (5) einen ersten Raumbereich (6a) innerhalb des Außengehäuses (2a, 2b) flüssigkeitsdicht von einem zweiten Raumbereich (6b) innerhalb des Außengehäuses (2a, 2b) trennt; und
- der erste Raumbereich (6a) zu einer äußeren Umgebung des Akkupacks (1) hin bezüglich eines Flüssigkeitsaustauschs offen ist;
- auf einer dem Boden abgewandten Oberfläche des Schaltungsträgers (4, 7) eine Dichtschicht (7) aus einem flüssigkeitsdichten Material angeordnet ist, die sich sowohl in dem ersten Raumbereich (6a) als auch in dem zweiten Raumbereich (6b) erstreckt; und
- das Dichtelement (5) zur flüssigkeitsdichten Trennung des ersten Raumbereichs (6a) von dem zweiten Raumbereich (6b) in direktem Kontakt mit der Dichtschicht (7) steht.

2. Akkupack nach Anspruch 1, wobei die Dichtschicht (7) ein Vergussmaterial enthält, das eine oder mehrere elektronische Komponenten, die auf dem Schaltungsträger (4, 7) montiert sind, flüssigkeitsdicht vergießt, sodass von dem ersten Raumbereich (6a) und/oder dem zweiten Raumbereich (6b) keine Flüssigkeit zu den elektronischen Bauteilen gelangen kann.

3. Akkupack nach einem der vorhergehenden Ansprüche, wobei die Oberschale (6a) einen Steg (8) aufweist und das Dichtelement (5) zwischen dem Steg (8) und der Dichtschicht (7) angeordnet ist und insbesondere von dem Steg (8) auf die Dichtschicht (7) gepresst wird.

4. Akkupack nach einem der vorhergehenden Ansprüche, wobei das Dichtelement (5) eine Dichtraupe enthält.

5. Akkupack nach einem der vorhergehenden Ansprüche, wobei das Dichtelement (5) ein Schaummaterial, insbesondere einen Kunststoffschaum, beispielsweise einen Polyurethanschaum oder einen Silikonschaum, enthält.

6. Akkupack nach einem der vorhergehenden Ansprüche, wobei das Akkupack (1) eine Kontakteinheit (9) zur elektrischen Kontaktierung des Elektrogeräts aufweist und die Kontakteinheit (9) in dem ersten Raumbereich (6a) auf dem Schaltungsträger (4, 7) angeordnet ist.

7. Akkupack nach Anspruch 6, wobei das Akkupack ein Schaumstoffteil enthält, das die Kontakteinheit (9) gegenüber der äußeren Umgebung verdeckt und wenigstens einen Einsteckschlitz zum Einstecken eines Kontaktelements des Elektrogeräts in die Kontakteinheit (9) aufweist.

8. Akkupack nach einem der vorhergehenden Ansprüche, wobei das Außengehäuse (2a, 2b) eine Drainageöffnung (10) aufweist, durch welche eine Flüssigkeit von dem ersten Raumbereich (6a) in die äußere Umgebung ablaufen kann.

9. Elektrogerät mit einem Akkupack (1) nach einem der vorhergehenden Ansprüche.

10. Verfahren zur Herstellung eines Akkupacks (1) für ein Elektrogerät, wobei
- eine Unterschale (2a) für ein Außengehäuse (2a, 2b) des Akkupacks (1) bereitgestellt wird, die einen Boden aufweist;
- wenigstens eine Akkumulatorzelle (3) in der Unterschale (2a) angeordnet wird;
- ein Schaltungsträger (4, 7) auf einer dem Boden abgewandten Seite der wenigstens einen Akkumulatorzelle (3) angeordnet wird;
- eine Oberschale (2b) für das Außengehäuse (2a, 2b) bereitgestellt wird;
- ein Dichtelement (5) zwischen der Oberschale (2a) und einer dem Boden abgewandten Seite des Schaltungsträgers (4, 7) angeordnet wird;
- die Oberschale (2b) mit der Unterschale (2a) verbunden wird;
- wobei das Dichtelement (5) derart angeordnet wird, dass es einen ersten Raumbereich (6a) innerhalb des Außengehäuses (2a, 2b) flüssigkeitsdicht von einem zweiten Raumbereich (6b) innerhalb des Außengehäuses (2a, 2b) trennt, nachdem die Oberschale (2b) mit der Unterschale (2a) verbunden wurde, und der erste Raumbereich (6a) zu einer äußeren Umgebung des Akkupacks (1) hin bezüglich eines Flüssigkeitsaustauschs offen ist;
- ein Begrenzungselement (11) auf eine dem Boden abgewandte Seite einer Grundplatte (4) des Schaltungsträgers (4, 7) aufgebracht wird;
- ein durch das Begrenzungselement (11) wenigstens zum Teil begrenzter Bereich der dem Boden abgewandten Seite der Grundplatte (4) mit einem Vergussmaterial beschichtet wird, um eine Dichtschicht (7) zu erzeugen;
- der beschichtete Bereich sich sowohl in dem ersten Raumbereich (6a) als auch in dem zweiten Raumbereich (6b) erstreckt.

11. Verfahren nach Anspruch 10, wobei das Dichtelement (5) als Dichtraupe auf den Schaltungsträger (4, 7) oder die Oberschale (2b) aufgebracht wird.

12. Verfahren nach einem der Ansprüche 10 oder 11, wobei die Dichtschicht (7) eine oder mehrere elektronische Komponenten, die auf dem Schaltungsträger (4, 7) montiert sind, flüssigkeitsdicht vergießt, sodass von dem ersten Raumbereich (6a) und/oder dem zweiten Raumbereich (6b) keine Flüssigkeit zu den elektronischen Bauteilen gelangen kann.

13. Verfahren nach einem der Ansprüche 10 bis 12, wobei das Dichtelement (5) auf die Dichtschicht (7) aufgebracht wird, um das Dichtelement (5) zwischen der Oberschale (2b) und der dem Boden abgewandten Seite des Schaltungsträgers (4, 7) anzuordnen.

14. Verfahren nach einem der Ansprüche 10 bis 12, wobei das Dichtelement (5) auf die Oberschale (2b) aufgebracht wird, um das Dichtelement (5) zwischen der Oberschale (2b) und der dem Boden abgewandten Seite des Schaltungsträgers (4, 7) anzuordnen.

15. Verfahren nach einem der Ansprüche 10 bis 14, wobei das Dichtelement (5) zwischen einem Steg (8) der Oberschale (2b) und der Dichtschicht (7) angeordnet wird und insbesondere von dem Steg (8) auf die Dichtschicht (7) gepresst wird.

## Claims

1. Battery pack for an electrical appliance, wherein
- the battery pack (1) comprises an outer housing (2a, 2b) comprising a bottom shell (2a) having a bottom, as well as a top shell (2b);
- the battery pack (1) comprises at least one battery cell (3) arranged in the bottom shell (2a);
- the battery pack (1) comprises a circuit carrier (4, 7) arranged on a side of the at least one battery cell (3) facing away from the bottom; and
- the battery pack (1) comprising a sealing element (5) arranged between the top shell (2b) and a side of the circuit carrier (4, 7) facing away from the bottom,
wherein
- the sealing element (5) separates a first spatial region (6a) within the outer housing (2a, 2b) in a liquid-tight manner from a second spatial region (6b) within the outer housing (2a, 2b); and
- the first spatial region (6a) is open towards an outer environment of the battery pack (1) with respect to an exchange of liquid;
- on a surface of the circuit carrier (4, 7) facing away from the bottom a sealing layer (7) made of a liquid-tight material is arranged, which extends both in the first spatial region (6a) as well as in the second spatial region (6b); and
- the sealing element (5) is in direct contact with the sealing layer (7) for liquid-tight separation of the first spatial region (6a) from the second spatial region (6b).

2. Battery pack according to claim 1,
wherein the sealing layer (7) contains a potting material, which pots one or several electronic components, which are mounted on the circuit carrier (4, 7), in a liquid-tight manner so that from a first spatial region (6a) and/or the second spatial region (6b) no liquid can reach the electronic components.

3. Battery pack according to any one of the preceding claims, wherein the top shell (6a) comprises a web (8) and the sealing element (5) is arranged between the web (8) and the sealing layer (7) and in particular is pressed by the web (8) to the sealing layer (7).

4. Battery pack according to any one of the preceding claims, wherein the sealing element (5) comprises a sealing bead.

5. Battery pack according to any one of the preceding claims, wherein the sealing element (5) comprises a foam material, in particular a plastic foam, for instance a polyurethane foam or a silicone foam.

6. Battery pack according to any one of the preceding claims, wherein the battery pack (1) comprises a contact unit (9) for electrical contacting of the electrical appliance and the contact unit (9) is arranged in the first spatial region (6a) on the circuit carrier (4, 7).

7. Battery pack according to claim 6, wherein the battery pack comprises a foamed material part covering the contact unit (9) against the external environment and comprises at least one insertion slot for inserting a contact element of the electrical appliance into the contact unit (9).

8. Battery pack according to any one of the preceding claims, wherein the outer housing (2a, 2b) comprises a drainage opening (10), through which a liquid can drain from the first spatial region (6a) into the external environment.

9. Electrical appliance comprising a battery pack (1) according to any one of the preceding claims.

10. Method for manufacturing a battery pack (1) for an electrical appliance, wherein
- a bottom shell (2a) for an outer housing (2a, 2b) of the battery pack (1) is provided, which bottom shell (2a) comprises a bottom;
- at least one battery cell (3) is arranged in the bottom shell (2a);
- a circuit carrier (4, 7) is arranged on a side of the at least one battery cell (3) facing away from the bottom;
- a top shell (2b) for the outer housing (2a, 2b) is provided;
- a sealing element (5) is arranged between the top shell (2a) and a side of the circuit carrier (4, 7) facing away from the bottom;
- the top shell (2b) is connected with the bottom shell (2a);
- wherein the sealing element (5) is arranged in such a way that it separates a first spatial region (6a) within the outer housing (2a, 2b) in a liquid-tight manner from a second spatial region (6b) within the outer housing (2a, 2b), after the top shell (2b) was connected with the bottom shell (2a), and the first spatial region (6a) is open towards an external environment of the battery pack (1) with respect to an exchange of liquid
- a boundary element (11) is applied to a side of a base plate (4) of the circuit carrier (4, 7);
- a portion of the side of the base plate (4) facing away from the bottom, which is bounded at least in part by the boundary element (11) is coated with a potting material in order to create a sealing layer (7);
- the coated portion extends both in the first spatial region (6a) as well as in the second spatial region (6b).

11. Method according to claim 10, wherein the sealing element (5) is applied as sealing bead on the circuit carrier (4, 7) or the top shell (2b).

12. Method according to any one of claims 10 or 11, wherein the sealing layer (7) pots one or several electronic components, which are mounted on the circuit carrier (4, 7), in a liquid-tight manner so that no liquid from the first spatial region (6a) and/or the second spatial region (6b) can reach the electronic components.

13. Method according to any one of claims 10 to 12, wherein the sealing element (5) is applied to the sealing layer (7) in order to arrange the sealing element (5) between the top shell (2b) and the side of the circuit carrier (4, 7) facing away from the bottom.

14. Method according to any one of claims 10 to 12, wherein the sealing element (5) is applied to the top shell (2b) in order to arrange the sealing element (5) between the top shell (2b) and the side of the circuit carrier (4, 7) facing away from the bottom.

15. Method according to any one of claims 10 to 14, wherein the sealing element (5) is arranged between a web (8) of the top shell (2b) and the sealing layer (7) and in particular is pressed by the web (8) to the sealing layer (7).

## Revendications

1. Bloc d'accumulateur pour un appareil électrique, dans lequel
- le bloc d'accumulateur (1) présente un boîtier extérieur (2a, 2b) muni d'une coque inférieure (2a) qui présente un fond, ainsi que d'une coque supérieure (2b) ;
- le bloc d'accumulateur (1) présente au moins une cellule d'accumulateur (3) qui est disposée dans la coque inférieure (2a) ;
- le bloc d'accumulateur (1) présente un support de circuit (4, 7) qui est disposé sur un côté, détourné du fond, de ladite au moins une cellule d'accumulateur (3) ;
- le bloc d'accumulateur (1) présente un élément d'étanchéité (5) qui est disposé entre la coque supérieure (2b) et un côté, détourné du fond, du support de circuit (4, 7), dans lequel
- l'élément d'étanchéité (5) sépare de manière étanche au liquide une première zone spatiale (6a) à l'intérieur du boîtier extérieur (2a, 2b) d'une deuxième zone spatiale (6b) à l'intérieur du boîtier extérieur (2a, 2b) ; et
- la première zone spatiale (6a) est ouverte vers un environnement extérieur du bloc d'accumulateur (1) concernant un échange de liquide ;
- sur une surface, détournée du fond, du support de circuit (4, 7) est disposée une couche d'étanchéité (7) d'un matériau étanche au liquide et qui s'étend à la fois dans la première zone spatiale (6a) et dans la deuxième zone spatiale (6b) ; et
- l'élément d'étanchéité (5) est en contact direct avec la couche d'étanchéité (7) pour la séparation étanche au liquide de la première zone spatiale (6a) de la deuxième zone spatiale (6b).

2. Bloc d'accumulateur selon la revendication 1, dans lequel la couche d'étanchéité (7) contient une matière de scellement qui scelle de manière étanche au liquide un ou plusieurs composants électroniques qui sont montés sur le support de circuit (4, 7) de sorte qu'aucun liquide de la première zone spatiale (6a) et/ou de la deuxième zone spatiale (6b) ne peut atteindre les composants électroniques.

3. Bloc d'accumulateur selon l'une quelconque des revendications précédentes, dans lequel la coque supérieure (6a) présente une entretoise (8), et l'élément d'étanchéité (5) est disposé entre l'entretoise (8) et la couche d'étanchéité (7) et est en particulier pressé sur la couche d'étanchéité (7) par l'entretoise (8).

4. Bloc d'accumulateur selon l'une quelconque des revendications précédentes, dans lequel l'élément d'étanchéité (5) comporte un cordon d'étanchéité.

5. Bloc d'accumulateur selon l'une quelconque des revendications précédentes, dans lequel l'élément d'étanchéité (5) comporte une matière en mousse, en particulier une mousse plastique, par exemple une mousse de polyuréthane ou une mousse de silicone.

6. Bloc d'accumulateur selon l'une quelconque des revendications précédentes, dans lequel le bloc d'accumulateur (1) présente une unité de contact (9) pour la mise en contact électrique de l'appareil électrique, et l'unité de contact (9) est disposée dans la première zone spatiale (6a) sur le support de circuit (4, 7).

7. Bloc d'accumulateur selon la revendication 6, dans lequel le bloc d'accumulateur comporte une pièce en mousse qui recouvre l'unité de contact (9) par rapport à l'environnement extérieur et présente au moins une fente d'insertion pour l'insertion d'un élément de contact de l'appareil électrique dans l'unité de contact (9).

8. Bloc d'accumulateur selon l'une quelconque des revendications précédentes, dans lequel le boîtier extérieur (2a, 2b) présente un orifice de drainage (10) à travers lequel un liquide peut s'écouler de la première zone spatiale (6a) à l'environnement extérieur.

9. Appareil électrique, comprenant un bloc d'accumulateur (1) selon l'une quelconque des revendications précédentes.

10. Procédé de fabrication d'un bloc d'accumulateur (1) pour un appareil électrique, dans lequel
- une coque inférieure (2a) pour un boîtier extérieur (2a, 2b) du bloc d'accumulateur (1) et qui présente un fond est fournie ;
- au moins une cellule d'accumulateur (3) est disposée dans la coque inférieure (2a) ;
- un support de circuit (4, 7) est disposé sur un côté, détourné du fond, de ladite au moins une cellule d'accumulateur (3) ;
- une coque supérieure (2b) pour le boîtier extérieur (2a, 2b) est fournie ;
- un élément d'étanchéité (5) est disposé entre la coque supérieure (2a) et un côté, détourné du fond, du support de circuit (4, 7) ;
- la coque supérieure (2a) est reliée à la coque inférieure (2a) ;
- dans lequel l'élément d'étanchéité (5) est disposé de telle sorte qu'il sépare de manière étanche au liquide une première zone spatiale (6a) à l'intérieur du boîtier extérieur (2a, 2b) d'une deuxième zone spatiale (6b) à l'intérieur du boîtier extérieur (2a, 2b) après que la coque supérieure (2b) a été reliée à la coque inférieure (2a), et la première zone spatiale (6a) est ouverte vers un environnement extérieur du bloc d'accumulateur (1) concernant un échange de liquide ;
- un élément de délimitation (11) est appliqué sur un côté, détourné du fond, d'une plaque de base (4) du support de circuit (4, 7) ;
- une zone au moins partiellement délimitée par l'élément de délimitation (11) du côté, détourné du fond, de la plaque de base (4) est recouverte d'une matière de scellement pour produire une couche d'étanchéité (7) ;
- la zone recouverte s'étend à la fois dans la première zone spatiale (6a) et dans la deuxième zone spatiale (6b).

11. Procédé selon la revendication 10, dans lequel l'élément d'étanchéité (5) est appliqué au support de circuit (4, 7) ou à la coque supérieure (2b) sous la forme d'un cordon d'étanchéité.

12. Procédé selon l'une quelconque des revendications 10 ou 11, dans lequel la couche d'étanchéité (7) scelle de manière étanche au liquide un ou plusieurs composants électroniques qui sont montés sur le support de circuit (4, 7) de sorte qu'aucun liquide de la première zone spatiale (6a) et/ou de la deuxième zone spatiale (6b) ne peut atteindre les composants électroniques.

13. Procédé selon l'une quelconque des revendications 10 à 12, dans lequel l'élément d'étanchéité (5) est appliqué à la couche d'étanchéité (7) pour disposer l'élément d'étanchéité (5) entre la coque supérieure (2b) et le côté, détourné du fond, du support de circuit (4, 7).

14. Procédé selon l'une quelconque des revendications 10 à 12, dans lequel l'élément d'étanchéité (5) est appliqué à la coque supérieure (2b) pour disposer l'élément d'étanchéité (5) entre la coque supérieure (2b) et le côté, détourné du fond, du support de circuit (4, 7).

15. Procédé selon l'une quelconque des revendications 10 à 14, dans lequel l'élément d'étanchéité (5) est disposé entre une entretoise (8) de la coque supérieure (2b) et la couche d'étanchéité (7) et est en particulier pressé sur la couche d'étanchéité (7) par l'entretoise (8).
